# EUROPEAN PATENT APPLICATION

(11) **EP 4 733 193 A1**
(43) Date of publication of application: **29.04.2026**
(21) Application number: 24209312.8
(22) Date of filing: 28.10.2024
(51) Int. Cl.: B64D 15/12, B64D 15/20, B64D 15/22

(54) **DE-ICING SYSTEM CONTROL**

(71) Applicant: Goodrich Corporation, Charlotte, NC 28217-4578 (US)
(72) Inventor: PAWLUCKI, Mateusz, 37-733 Pikulice (PL); BOTURA, Galdemir, Copley, 44321 (US); TSACHOURIDIS, Vasileios, T12Y058 Cork City (GR)
(74) Representative: Dehns

(57) **Abstract**

A control system for a de-icing system for removing ice from an aircraft surface, the control system comprising: one or more sensors (3) configured to be mounted to or within an external surface (1b) of the aircraft surface, and to determine a change in sensed characteristic (40) that is indicative of ice shedding from the surface.

## Description

### TECHNICAL FIELD

The present disclosure is concerned with a de-icing system and protocol particularly for de-icing parts, e.g. propellers/rotors, wings, wing flaps, etc., of an aircraft or wind turbine.

### BACKGROUND

In cold conditions, ice is liable to accumulate on the surface of blades of the rotor or propeller, or the wings or other surfaces of an aircraft. This can occur on the ground or in flight. Accumulation of ice on aircraft parts can become a serious problem as the amount of ice can amass a large amount of weight, thus adversely affecting flight characteristics or causing damage to engines or aircraft structures.

Modern day aircraft are, therefore, equipped with anti-icing systems to prevent the formation of ice and/or with de-icing systems to melt, eject or shed accumulated ice from aircraft parts.

WO 2010/049063 and US 2011/0290784 describe de-icing devices comprising a base heating layer permanently supplied with electric current and an additional heating layer supplied with current only during certain periods.

Other anti/de-icing devices use a circulation of hot air below the surface or use electric resistors. Inflatable de-icing devices are also known that cause accumulated ice to break up.

A problem that has been identified with known de-icing systems is that they consume a significant amount of energy in cold/icing conditions and are typically set to heat for a set period of time, which can result in an inefficient system.

There is a need for a simple, effective and efficient way of removing ice that has formed on aircraft surfaces.

### SUMMARY

In one aspect, the present invention comprises a control system for a de-icing system for removing ice from an aircraft surface, the control system comprising:
one or more sensors configured to be mounted to or within an external surface of the aircraft surface, and to determine a change in sensed characteristic that is indicative of ice shedding from the surface.

The sensors may be temperature sensors arranged to sense temperature or change in temperature at the external surface.

The sensed characteristic may comprise a change from an increase to a decrease in temperature and/or a change in rate of change of temperature.

The sensors may be incorporated into or mounted onto the external surface.

A controller may be provided to receive the determined change in characteristic.

The controller may control operation of one or more heater elements of the de-icing system, in use, based on the sensed characteristic.

Also provided is a de-icing system for removing ice from an aircraft surface comprising: one or more heater elements arranged within the surface; and a control system as defined above for controlling operation of the one or more heating elements in response to the sensed characteristic.

There is also provided a method of controlling a de-icing system for removing ice from an aircraft surface, the method comprising: sensing temperature at an external surface of the aircraft surface by means of one or more sensors configured to be mounted to or within the external surface of the aircraft surface, and to determine a change in sensed characteristic that is indicative of ice shedding from the surface; controlling operation of the de-icing system in response to the sensed characteristic.

Also provided is a method of removing ice from a surface of an aircraft component, comprising applying power to one or more heating elements of a de-icing system in heat conductive contact with the surface on which ice has formed, sensing temperature at an external surface of the aircraft surface by means of one or more sensors configured to be mounted to or within the external surface of the aircraft surface, and to determine a change in sensed characteristic that is indicative of ice shedding from the surface; controlling operation of the one or more heating elements of the de-icing system in response to the sensed characteristic

### BRIEF DESCRIPTION OF THE DRAWINGS

Preferred embodiments will now be described by way of example, with reference to the drawings. It should be noted that these are examples only, and that variations are possible within the scope of the claims.
Fig. 1A shows an example of an aircraft surface;
Fig. 1B shows a sectional view of a surface such as shown in Fig. 1A,
Fig. 2 shows an example of an aircraft surface on which a layer of ice is formed.
Fig. 3 shows an example of temperature profile as ice forms on and is removed from an aircraft surface; and
Fig. 4 shows an example of temperature rate profile as ice forms on and is removed from an aircraft surface.

### DETAILED DESCRIPTION

The system and method of this disclosure are concerned with the de-icing control system and protocol and are not limited to the use of any specific type of heating to melt/remove the ice. The system of the present invention can, therefore, be used in combination with any known type of heater that can be used to melt/remove ice from aircraft surfaces.

The system and protocol of his disclosure use one or more sensors configured to be mounted to or within the outer surface of the aircraft surface, and to determine a change in sensed characteristic that is indicative of ice shedding from the surface. Based on detection of such change, the system is able to control the heater(s) of the de-icing system to reduce or stop heating. This means that the operation of the heater(s) and, hence, the power consumption is controlled according to the presence of ice on the surface. This provides a more efficient system than known control systems which operate by applying heating for given periods or intervals of time, regardless of the temperature profile and continued presence of ice on the surface.

The sensor(s) may be one or more temperature sensors that provide a temperature signal indicative of the temperature at the surface location of the temperature sensor(s). A feature or characteristic of the temperature signal that is indicative of ice shedding from the surface is detected and extracted to control the de-icing system. Other types of sensor which are able to detect such physical conditions at the surface indicative of ice shedding from the surface, e.g. resistive sensors, may also be used.

The one or more sensors should be mounted to the outer surface of the aircraft surface that uses the de-icing system or incorporated into the surface close to its outer surface. Some aircraft surfaces include a protective or abrasion surface or coating, and the one or more sensors may be located in this surface or coating close to the outer surface where the ice accumulates.

By way of background, the most commonly used de-icing systems typically have a pre-set heater ON operation time, set to address expected or worse-case ice accumulation. For example, pneumatic de-icing systems may be operated in pre-set de-icing intervals with a heater OFF time of 1 minute and 3 minute cycles with the heaters ON for 6 seconds. Electrical de-icing systems may use pre-set heater ON times of e.g. 5 to 25 seconds depending on outside temperatures. Such conventional systems do not, however, use any form of control protocol to control the heaters during operation according to whether ice has been melted or shed. Because the ON/OFF times of the conventional systems are pre-set, heaters may be operated even if no longer needed, i.e. after ice has shed/melted, which results in inefficiencies.

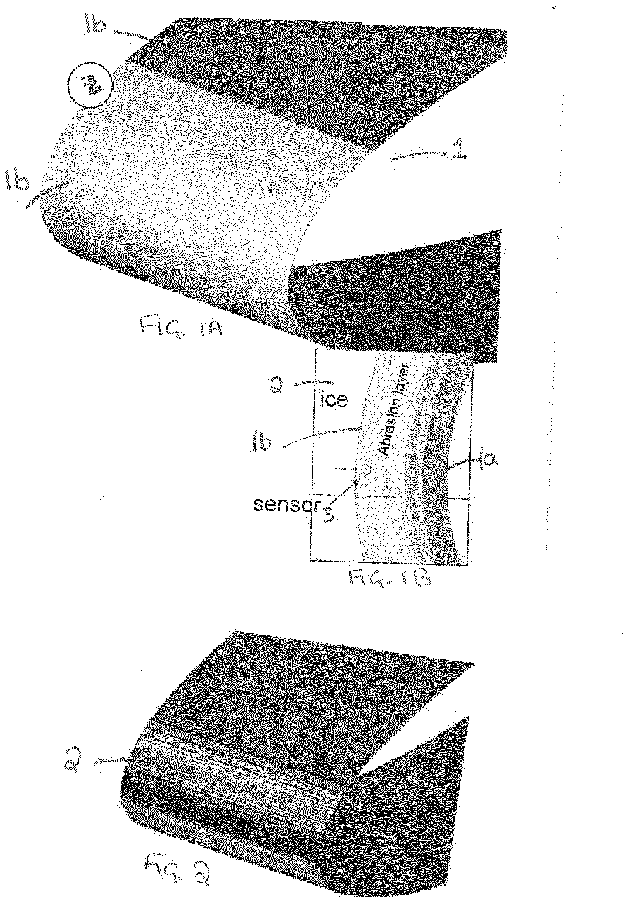

Examples of the present solution will be described first with reference to Figs. 1A and 1B and Fig. 2, which show an example of an aircraft surface e.g. a wing, on which ice may accumulate and which may have an associated de-icing system comprising heating elements that are switched on to melt accumulated ice from the surface.

As mentioned above, the present disclosure is concerned with a control arrangement for providing control signals or protocol to the heater elements of the de-icing system and is not limited to any particular de-icing system. Accordingly, we will not describe any features of the de-icing system.

The drawings show an aircraft surface 1 having an interior surface 1a and an external surface 1b which is the surface open to the atmosphere/environment and on which ice 2 may accumulate. In some examples, such as shown here, the external surface 1b is provided by an abrasion layer (a layer of protective material) provided on the aircraft part. Such layers or coatings are often used to protect composite surfaces. They are typically very thin but robust and may be sprayed or painted onto the aircraft part or applied on other ways e.g. as tapes or films or applied chemically or thermally. In other cases, the external surface may be the exterior of the aircraft surface without any such protective layer or coating.

The one or more sensors 3 are located on the external surface or within the material forming the external surface, close to the external surface such that they can sense characteristics of the external surface.

A de-icing system will be arranged to heat the aircraft surface from within or inside of the aircraft surface 1 to cause accumulated ice on the external surface to melt or shed. Shedding is when pieces of ice are ejected from the surface when sufficient heat has been applied to overcome adhesion of the ice to the surface, even if the ice has not yet melted. Because ice has low thermal conductivity, when a layer of ice 2 is formed on the surface 1b, the external surface/abrasion layer 1b is isolated, by the ice layer 2, from strong convective heat loads. This property is used in the control protocol described further below.

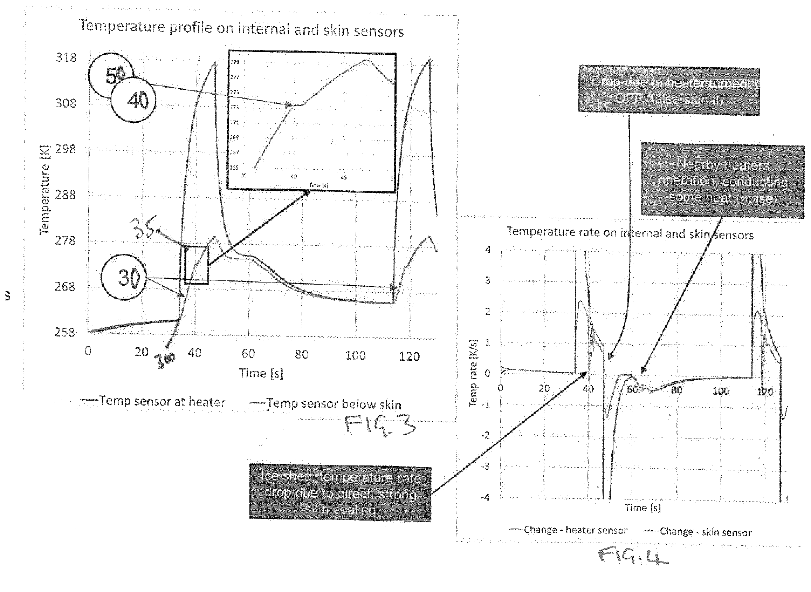

Fig. 3 shows an example of a temperature profile as ice forms on and is removed from an aircraft surface when the heater elements of the de-icing system are operational; and

Fig. 4 shows an example of temperature rate profile as ice forms on and is removed from an aircraft surface.

The figures show the temperature/temperature change at the heater elements of the de-icing system over time and also the output signal of the sensor (here, temperature sensor) located at the external surface, for the control protocol.

At time 300 (Fig. 3), the de-icing heater element is switched on and so its temperature rises rapidly. The layer of ice 2 provides isolation, initially, enabling the heater temperature to rise rapidly. Similarly, the characteristic indicative of the surface temperature sensed by the sensor 3 (here temperature) rises rapidly at 30 due to the isolating properties of the ice layer.

At some point, 40, the temperature of the heaters of the de-icing system is high enough to start melting the ice/break the adhesion between the ice and the surface so that the ice melts or sheds. When the ice melts or sheds, the strong (cooling) convective heat load is acting directly on the external surface/abrasion layer. This cooling causes a change 50 of the temperature slope of the surface sensor where the temperature may drop or become negative for a short time.

For the same period of time, Fig. 4 shows the change in temperature - i.e. temperature rate for each of: the de-icing system heater elements; and the surface sensor 3. The inflection point 40 of Fig. 3 is shown by a rapid rate drop in Fig. 4 due to the direct strong cooling of the surface when the ice sheds.

The surface sensor(s) 3 provide sense outputs to a controller which can extract the feature from the output signal that is indicative of ice shedding from the surface (such as the inflection 40) and use this information to control the ON/OFF operation of the heater element(s) of the de-icing system. The de-icing system is, therefore, operated based on feedback from the external surface temperature signal responsive to ice shedding/melting.

As mentioned above, the surface sensor 3 can be incorporated in the external surface or can be mounted to the external surface. In the latter case, the response may be more accurate but, on the other hand, the sensors ae more exposed and therefore liable to damage. Sensors incorporated into the surface are protected.

Compared to conventional control of de-icing systems, the control disclosed herein can result in a more efficient de-icing process.

## Claims

1. A control system for a de-icing system for removing ice from an aircraft surface, the control system comprising:
one or more sensors (3) configured to be mounted to or within an external surface (1b) of the aircraft surface, and to determine a change in sensed characteristic (40) that is indicative of ice shedding from the surface.

2. The control system of claim 1, wherein the one or more sensors (3) are temperature sensors arranged to sense temperature or change in temperature at the external surface.

3. The control system of claim 1 or 2, wherein the sensed characteristic comprises a change from an increase to a decrease in temperature.

4. The control system of claim 1 or 2, wherein the sensed characteristic comprises a change in rate of change of temperature.

5. The control system of any preceding claim, wherein the one or more sensors is configured to be incorporated into the external surface.

6. The control system of any of claims 1 to 4, wherein the one or more sensors is configured to be mounted onto the external surface.

7. The control system of any preceding claim, further comprising a controller to receive the determined change in characteristic.

8. The control system of claim 7, wherein the controller controls operation of one or more heater elements of the de-icing system, in use, based on the sensed characteristic.

9. A de-icing system for removing ice from an aircraft surface comprising:
one or more heater elements arranged within the surface; and
a control system as claimed in any preceding claim for controlling operation of the one or more heating elements in response to the sensed characteristic.

10. A method of controlling a de-icing system for removing ice from an aircraft surface, the method comprising:
sensing temperature at an external surface of the aircraft surface by means of one or more sensors (3) configured to be mounted to or within the external surface (1b) of the aircraft surface, and to determine a change in sensed characteristic (40) that is indicative of ice shedding from the surface;
controlling operation of the de-icing system in response to the sensed characteristic.

11. A method of removing ice from a surface of an aircraft component,
comprising applying power to one or more heating elements of a de-icing system in heat conductive contact with the surface on which ice has formed,
sensing temperature at an external surface of the aircraft surface by means of one or more sensors (3) configured to be mounted to or within the external surface (1b) of the aircraft surface, and to determine a change in sensed characteristic (40) that is indicative of ice shedding from the surface;
controlling operation of the one or more heating elements of the de-icing system in response to the sensed characteristic
